# EUROPÄISCHE PATENTANMELDUNG

(11) **EP 2 998 094 A2**
(43) Veröffentlichungstag der Anmeldung: **23.03.2016**
(21) Anmeldenummer: 15181436.5
(22) Anmeldetag: 18.08.2015
(51) Int. Cl.: B29C 45/27

(54) **HEISSKANALDÜSE**

(30) Priorität: 28.08.2014 DE 102014012541
(71) Anmelder: Schreck, Hans, 35099 Burgwald-Bottendorf (DE)
(72) Erfinder: Schreck, Hans, 35099 Burgwald-Bottendorf (DE)
(74) Vertreter: advotec.

(57) **Zusammenfassung**

Die Erfindung betrifft eine Heißkanaldüse (10) zum Anspritzen von Kunststoffformteilen, wobei die Heißkanaldüse in ein Formwerkzeug (11) einer Heißkanalspritzgussvorrichtung einsetzbar ist, wobei die Heißkanaldüse einen Düsenkörper (14) aufweist, wobei in dem Düsenkörper ein Schmelzekanal (26) für Kunststoffmaterial ausgebildet ist, wobei der Schmelzekanal bis zu einer Düsenöffnung (28) an einem Einspritzende (15) der Heißkanaldüse verläuft, wobei die Heißkanaldüse eine Nadel (30) aufweist, wobei die Nadel in einem Nadelführungskanal (31) in dem Düsenkörper längsverschieblich gelagert ist, wobei die Düsenöffnung durch die Nadel in einer Öffnungsposition (32) der Nadel öffenbar und in einer Schließposition der Nadel verschließbar ist, wobei in der Öffnungsposition das Kunststoffmaterial in eine Formkavität (13) des Formwerkzeugs geleitet werden kann, wobei der Schmelzekanal bis zu dem Einspritzende von der Nadel beabstandet im Düsenkörper verläuft, derart, dass die Nadel und der Schmelzekanal in dem Düsenkörper seitlich nebeneinander ausgebildet sind, wobei der Düsenkörper zumindest eine Materialausnehmung (41) aufweist, die zwischenliegend dem Schmelzekanal und dem Nadelführungskanal ausgebildet ist, und den Düsenkörper in voneinander beabstandete Gehäusebereiche (43, 44) unterteilt.

## Beschreibung

Die Erfindung betrifft eine Heißkanaldüse zum Anspritzen von Kunststoffformteilen, wobei die Heißkanaldüse in ein Formwerkzeug einer Heißkanalspritzgussvorrichtung einsetzbar ist, wobei die Heißkanaldüse einen Düsenkörper aufweist, wobei in dem Düsenkörper ein Schmelzekanal für Kunststoffmaterial ausgebildet ist, wobei der Schmelzekanal bis zu einer Düsenöffnung an einem Einspritzende der Heißkanaldüse verläuft, wobei die Heißkanaldüse eine Nadel aufweist, wobei die Nadel in einem Nadelführungskanal in dem Düsenkörper längsverschieblich gelagert ist, wobei die Düsenöffnung durch die Nadel in einer Öffnungsposition der Nadel öffenbar und in einer Schließposition der Nadel verschließbar ist, wobei in der Öffnungsposition das Kunststoffmaterial in eine Formkavität des Formwerkzeugs geleitet werden kann.

Derartige Heißkanaldüsen sind hinreichend bekannt und werden regelmäßig zum Anspritzen von Kunststoffformteilen, bei denen eine saubere Trennung von Kunststoffformteil und einer Einspritzöffnung einer Formkavität gewünscht ist, verwendet. Die Nadel bildet zusammen mit einer Einspritzöffnung einen sogenannten Nadelverschluss, derart, dass beim Einspritzen eines Kunststoffmaterials in eine Formkavität ein durch die Einspritzöffnung ausgebildeter Anschnittdurchmesser durch die Nadel verschlossen werden kann. Bei einem Verschließen wird zunächst ein Spritzrest des Kunststoffmaterials in das betreffende Kunststoffteil hineingedrückt. In der Schließposition ist dann die Nadel genau bündig mit einer Oberfläche des Kunststoffformteils angeordnet, sodass lediglich eine runde Markierung auf der Oberfläche des Kunststoffformteils entsteht. Bei Heißkanaldüsen mit sogenannten thermischen Verschlüssen entsteht im Bereich der Einspritzöffnung durch Fadenziehen vom Kunststoffmaterial regelmäßig ein Grat aus überschüssigem Kunststoffmaterial, was eine weitere Bearbeitung der betreffenden Kunststoffteile erforderlich macht.

Bei den sogenannten Nadelverschlusssystemen ist der Schmelzekanal mit dem Kunststoffmaterial in der Regel so in einem Düsenkörper der Heißkanaldüse ausgebildet, dass die Nadel vollständig bzw. zu einem Großteil durch den Schmelzekanal verläuft. Die Kunststoffschmelze befindet sich somit zusammen mit der Nadel, diese koaxial umgebend, in einer gemeinsamen Bohrung in dem Düsenkörper. Das Kunststoffmaterial wird meist seitlich an einem oberen Ende des Düsenkörpers diesem zugeführt und dann in die betreffende Bohrung bzw. Abschnitte des Schmelzekanals geleitet, in dem auch die Nadel verläuft. Bei der Zuführung des Kunststoffmaterials umströmt dieses dann die Nadel, da es quer zur Nadel in den gemeinsamen Abschnitt des Schmelzekanals fließt. Ein Teil des Kunststoffmaterials läuft nach der Trennung durch die Nadel hinter der Nadel wieder zusammen. Insbesondere die Trennung eines Stroms des Kunststoffmaterials bzw. der Schmelze bleibt beim gesamten nachfolgenden Durchströmprozess des Kunststoffmaterials durch den Düsenkörper bis in die Formkavität hinein erhalten. So sind durch die Trennung des Stroms aus Kunststoffmaterial auch noch bei fertigen Kunststoffformteilen Zusammenflusslinien erkennbar. Dies führt bei qualitativ hochwertigen Kunststoffformteilen regelmäßig zu Qualitätsverlusten oder auch zu Brüchen im Bereich von Zusammenflusslinien. Dies betrifft zum Beispiel optische Linsen, Scheinwerferabdeckungen oder Laborprodukte. Diese sogenannten, durch das Umströmen der Nadel mit Kunststoffmaterial bedingten Fließschatten können mit spannungsoptischen Verfahren sichtbar gemacht werden. Um einen eventuellen Bruch eines Kunststoffformteils zu vermeiden, ist es daher bisher erforderlich, eine Lage von Anspritzpunkten auch im Hinblick auf eine Schwächung des betreffenden Kunststoffformteils durch Fließschatten bzw. Zusammenflusslinien auszuwählen.

Bei den bekannten Heißkanaldüsen können eine Heizeinrichtung und der Schmelzekanal konzentrisch angeordnet sein. Bei sogenannten Flachdüsen sind der Schmelzekanal und die Heizeinrichtung nebeneinander liegend angeordnet, sodass die Flachdüsen für Spritzgießwerkzeuge mit besonders eng nebeneinander liegend angeordneten Formnestern verwendet werden können. Je nach den gegebenen An- oder Einbauverhältnissen kann es jedoch bei dem thermischen Ausdehnungsverhalten der Heißkanaldüsen aufgrund der nicht konzentrischen sondern seitlichen Anordnung der Heizeinrichtung zum Schmelzekanal zu einer mehr oder weniger ausgeprägten seitlichen Auslenkung der Heißkanaldüse kommen. Auch kann eine unerwünschte Temperaturüberhöhung im Bereich des Schmelzekanals auftreten, derart, dass in einem mittleren Bereich des Schmelzekanals ein Temperaturprofil stark ansteigt, was prinzipiell unerwünscht ist.

Bei den Nadelverschlusssystemen ist weiter das Problem bekannt, die im Nadelführungskanal längsverschiebliche Nadel gegenüber dem Schmelzekanal verlässlich abzudichten. So befindet sich ein Dichtbereich dicht an der Kunststoffschmelze, die mit einem Druck von weit über 2.000 bar beaufschlagt sein kann. Kunststoffe haben die Eigenschaft, schon bei Verarbeitungstemperaturen einem Molekülkettenabbau zu unterliegen. Durch diesen Abbau werden unter anderem auch leicht fließende und flüchtige Inhaltsstoffe freigesetzt. Diese Stoffe diffundieren sehr leicht durch den Dichtbereich der Nadel. Dieser Durchtritt von Stoffen im Dichtbereich in den Nadelführungskanal ist unerwünscht, da er zum Ausfall der Heißkanaldüse führen kann.

Der vorliegenden Erfindung liegt daher die Aufgabe zugrunde, eine Heißkanaldüse zum Anspritzen von Kunststoffformteilen vorzuschlagen, die eine verbesserte Abdichtung einer Nadel aufweist.

Diese Aufgabe wird durch eine Heißkanaldüse mit den Merkmalen des Anspruchs 1 und eine Heißkanalspritzgussvorrichtung mit den Merkmalen des Anspruchs 19 gelöst.

Die erfindungsgemäße Heißkanaldüse zum Anspritzen von Kunststoffformteilen ist in ein Formwerkzeug einer Heißkanalspritzgussvorrichtung einsetzbar, wobei die Heißkanaldüse einen Düsenkörper aufweist, wobei in dem Düsenkörper ein Schmelzekanal für Kunststoffmaterial ausgebildet ist, wobei der Schmelzekanal bis zu einer Düsenöffnung an einem Einspritzende der Heißkanaldüse verläuft, wobei die Heißkanaldüse eine Nadel aufweist, wobei die Nadel in einem Nadelführungskanal in dem Düsenkörper längsverschieblich gelagert ist, wobei die Düsenöffnung durch die Nadel in einer Öffnungsposition der Nadel öffenbar und in einer Schließposition der Nadel verschließbar ist, wobei in der Öffnungsposition das Kunststoffmaterial in eine Formkavität des Formwerkzeugs geleitet werden kann, wobei der Schmelzekanal bis zu dem Einspritzende von der Nadel beabstandet im Düsenkörper verläuft, derart, dass die Nadel und der Schmelzekanal in dem Düsenkörper seitlich nebeneinander ausgebildet sind, wobei der Düsenkörper zumindest eine Materialausnehmung aufweist, die zwischenliegend dem Schmelzekanal und dem Nadelführungskanal ausgebildet ist, und den Düsenkörper in voneinander beabstandete Gehäusebereiche unterteilt.

Der in dem Düsenkörper verlaufende Schmelzekanal ist folglich von dem in dem Düsenkörper ebenfalls verlaufenden Nadelführungskanal getrennt ausgebildet, wobei die Materialausnehmung benachbart dem Schmelzekanal bzw. dem Nadelführungskanal so ausgebildet ist, dass diese zwischen dem Schmelzekanal und dem Nadelführungskanal liegt. Die Materialausnehmung unterteilt somit den Düsenkörper in die voneinander beabstandeten Gehäusebereiche, sodass in einem ersten Gehäusebereich des Düsenkörpers der Schmelzekanal und in einem zweiten Gehäusebereich des Düsenkörpers der Nadelführungskanal ausgebildet ist. Durch die Materialausnehmung kommt es zu einer thermischen Trennung des Schmelzekanals und des Nadelführungskanals, was die Möglichkeit eröffnet, den Schmelzekanal unabhängig vom Nadelführungskanal zu temperieren und umgekehrt. Der Nadelführungskanal kann somit vorzugsweise eine geringere Temperatur aufweisen als der Schmelzekanal, in dem das geschmolzene Kunststoffmaterial fließt. Dadurch, dass der Nadelführungskanal bzw. der zweite Gehäusebereich mit dem Nadelführungskanal eine vergleichsweise niedrige Temperatur aufweisen kann, wird eine Gefahr einer Diffusion von unerwünschten Stoffen über eine Dichtung bzw. eine Dichteinrichtung an dem Nadelführungskanal erheblich reduziert. Eine Lebensdauer der Dichteinrichtung wird wesentlich verlängert und die Heißkanaldüse dadurch länger nutzbar.

Vorteilhaft kann die Heißkanaldüse eine Heizeinrichtung aufweisen. Die Heizeinrichtung kann in dem Düsenkörper oder an dem Düsenkörper angeordnet sein. Die Heizeinrichtung kann eine Heizpatrone sein, die stabförmig ausgebildet ist und in einer zum Schmelzekanal parallelen Aufnahmebohrung in dem Düsenkörper eingesetzt ist.

Die Heizeinrichtung kann an oder in dem Düsenkörper angeordnet sein, wobei die Heizeinrichtung an eine Lage des Schmelzekanals angepasst sein kann, derart, dass bezogen auf einen Querschnitt des Düsenkörpers eine gleichmäßige Temperaturbeaufschlagung des Schmelzekanals erzielbar ist. Je nach Querschnittsform des Düsenkörpers und in Abhängigkeit einer Lage des Schmelzekanals im Düsenkörper kann der Schmelzekanal auch nicht koaxial zur Heizeinrichtung, welche regelmäßig an einem Außenumfang des Düsenkörpers angeordnet sein kann, angeordnet sein. Die Heizeinrichtung kann an der vom Schmelzekanal am weitesten beabstandeten Seite des Düsenkörpers relativ zu dessen Querschnitt mit einer höheren Wärmeleistung ausgelegt sein als auf einer am nächsten am Schmelzekanal befindlichen Seite des Düsenkörpers. Somit kann eine ungleichmäßige Erwärmung des Schmelzekanals vermieden werden.

Weiter können die Heizeinrichtung und der Schmelzekanal in dem Düsenkörper der Heißkanaldüse seitlich nebeneinander angeordnet sein, wobei die Heizeinrichtung in einem Beheizungskanal im Düsenkörper aufgenommen sein kann, und wobei der Düsenkörper zumindest eine weitere Materialausnehmung aufweisen kann, die zwischenliegend dem Schmelzekanal und dem Beheizungskanal ausgebildet sein kann, und den Düsenkörper in voneinander beabstandete Gehäusebereiche unterteilen kann. So kann ein Wärmeübergang von der Heizeinrichtung auf den Schmelzekanal durch das Material des Düsenkörpers beeinflusst werden und zwar derart, dass durch die weitere Materialausnehmung der Wärmeübergangswiderstand im Bereich der weiteren Materialausnehmung erhöht wird. Hierdurch kann erreicht werden, dass der benachbart zur weiteren Materialausnehmung angeordnete Teil des Schmelzekanals vergleichsweise geringer mit Wärme beaufschlagt wird, sodass in Längsrichtung des Schmelzekanals oberhalb und unterhalb des Bereichs der weiteren Materialausnehmung eine relativ höhere Beheizung des Schmelzekanals erfolgt. Hierdurch lassen sich Temperaturprofile in Längsrichtung des Schmelzekanals einstellen, die durch Vermeidung von Temperaturspitzen einer übermäßigen Verformung der Heißkanaldüse entgegenwirken. Darüber hinaus lassen sich derartige Temperaturprofile auch nutzen, um die Viskosität des plastifizierten Kunststoffmaterials im Schmelzekanal lokal zu beeinflussen bzw. einzustellen. Hierdurch kann beispielsweise durch Verhinderung von Wärmesenken an problematischen Querschnittsübergängen im Bereich des Schmelzekanals oder angrenzenden Bereichen einer Verstopfung bzw. einem unerwünschten Druckaufbau entgegengewirkt werden.

Vorteilhaft kann die Materialausnehmung als ein in Längsrichtung des Düsenkörpers verlaufender Längsschlitz ausgebildet sein. Der Längsschlitz kann einen die Heizeinrichtung aufnehmenden Beheizungsbereich des Düsenkörpers zwischen einem Düsenkörperfuß am Einspritzende zum Anschluss an ein Spritzgießwerkzeug und einem Düsenkörperkopf an einem Kopfende zur Aufnahme einer Düsenspitze trennen. Mittels einer derartigen Ausführung lässt sich das normalerweise vom Düsenkörperfuß zu einem mittleren Abschnitt des Schmelzekanals und ebenso von der Düsenspitze zu dem mittleren Abschnitt des Schmelzekanals hin stark ansteigende Temperaturprofil mit Ausbildung eines "Temperaturbauchs" im mittleren Bereich des Düsenkanals in ein weitestgehend konstantes Temperaturprofil ändern.

Als vorteilhaft kann es sich auch erweisen, wenn die Materialausnehmung als zumindest ein quer zur Düsenkörperlängsrichtung verlaufender Querschlitz ausgebildet ist, der einen das Heizelement aufnehmenden Beheizungsbereich des Düsenkörpers zwischen einem Düsenkörperfuß zum Anschluss an ein Spritzgießwerkzeug und einem Düsenkörperkopf zur Aufnahme einer Düsenspitze in zumindest zwei axial voneinander getrennte Beheizungsteilbereiche unterteilt. Mit einer derartigen Ausgestaltung ist es nicht nur möglich, den "Temperaturbauch" im mittleren Bereich des Schmelzekanals zu beeinflussen, sondern darüber hinaus wird durch die axiale Unterteilung in zwei Beheizungsteilbereiche die mögliche Wärmeausdehnung des Beheizungsbereichs des Düsenkörpers in axialer Richtung erheblich reduziert. Hierdurch kann einer quer zur Längsrichtung des Schmelzekanals gerichteten Temperaturverformung des Düsenkörpers gezielt entgegengewirkt werden.

Der Schmelzekanal kann bis zu dem Einspritzende von der Nadel beabstandet im Düsenkörper verlaufen, derart, dass in der Öffnungsposition der Nadel ein Umströmen der Nadel mit Kunststoffmaterial vermieden werden kann. Dadurch wird es möglich, dass bei einem Zurückziehen der Nadel aus der Düsenöffnung heraus in der Öffnungsposition der Schmelzekanal im Wesentlichen vollständig freigegeben ist, sodass bei einem Zusammentreffen von Kunststoffmaterial und Nadel diese nicht mit Kunststoffmaterial umströmt wird und sich sogenannte Fließschatten bilden. Weiter ist ein vollständiges Herausziehen der Nadel aus der Heißkanaldüse bzw. dem Düsenkörper nicht praktikabel, da hierzu ein wesentlicher Umbau einer Betätigungsvorrichtung zum Öffnen und Schließen der Heißkanaldüse bzw. zum Bewegen der Nadel erforderlich wäre. Ein wesentlich vergrößerter Nadelhub würde daher zu einer Vergrößerung einer Heißkanalspritzgussvorrichtung, in die die Heißkanaldüse eingesetzt ist, führen, was die Herstellungskosten der Heißkanalspritzgussvorrichtung erheblich verteuern würde. Bei der vorgeschlagenen Variante der Heißkanaldüse ist es daher möglich, ohne eine wesentliche Vergrößerung des Nadelhubs und gegebenenfalls erforderliche Umbauten an einer Heißkanalspritzgussvorrichtung dennoch Fließschatten zu vermeiden. Unter einer in der Heißkanaldüse gelagerten Nadel wird eine Nadel verstanden, die zumindest einem großen Teil einer Länge der Heißkanaldüse durch diese bzw. durch den Düsenkörper verläuft. Die Nadel steht infolgedessen direkt mit dem Düsenkörper in Kontakt und wird innerhalb diesem geführt. Dass die Nadel von dem Schmelzekanal beabstandet ist, bedeutet, dass Kunststoffmaterial in diesem betreffenden Bereich des Schmelzekanals nicht so mit der Nadel in Kontakt gelangen kann, dass das Kunststoffmaterial die Nadel umströmen kann. Folglich kann das Kunststoffmaterial dann die Nadel an keiner Stelle, relativ bezogen auf ihren Querschnitt, vollständig umgeben.

Der Nadelführungskanal kann eine Dichteinrichtung aufweisen, die die Nadel gegenüber dem Schmelzekanal abdichtet. So kann vermieden werden, dass plastifiziertes Kunststoffmaterial oder daraus gelöste Stoffe in den Schmelzekanal eindringen und eine Bewegung der Nadel behindern können. Die Dichteinrichtung kann auch als eine Lagerung oder eine Nadelführung in Art einer Bohrung im Düsenkörper oder auch aus einer Führungsbuchse im Düsenkörper ausgebildet sein.

In einer Ausführungsform kann die Dichteinrichtung durch eine Passung zwischen Nadel und Nadelführungskanal ausgebildet sein. Da die Nadel und der Nadelführungskanal gegenüber dem Schmelzekanal ein vergleichsweise niedriges Temperaturniveau aufweisen, kann eine besonders enge Passung ausgewählt werden, wodurch eine Abdichtung wesentlich erleichtert wird. Die Passung kann abschnittsweise oder vollständig über die gesamte Länge des Nadelführungskanals ausgebildet sein. Eine derartige Passung ist einfach herzustellen und bedarf keiner weiteren Bauteile zur Abdichtung.

Die Dichteinrichtung kann alternativ auch durch ein Dichtelement ausgebildet sein. Das Dichtelement kann beispielsweise eine Dichtbuchse aus Metall, Kunststoff oder Gummi sein. Eine Dichtbuchse kann auch die Funktion eines Führungselements der Nadel haben. Dabei kann die Dichtbuchse ein Kippen der Nadel im Düsenkörper verhindern. Das Dichtelement kann jedoch auch ein einfacher O-Ring sein. In einer weiteren Ausführungsform kann vorgesehen sein, das Dichtelement in Kombination mit einer Passung zwischen Nadel und Nadelführungskanal als Dichteinrichtung auszubilden.

Der Schmelzekanal innerhalb des Düsenkörpers kann aus einem Zuführkanalabschnitt und einem Einspritzkanalabschnitt gebildet sein, wobei dann der Einspritzkanalabschnitt an dem Einspritzende ausgebildet sein kann. Der Zuführkanalabschnitt kann vorzugsweise an einem dem Einspritzende gegenüber liegenden Ende der Heißkanaldüse bzw. einer Stirnfläche des Düsenkörpers beginnend bis zum Einspritzkanalabschnitt durch den Düsenkörper verlaufen. Der Düsenkörper kann dann mit seiner Stirnseite, unabhängig von der Ausbildung des Formwerkzeugs, an einen Heißkanalverteiler abdichtend angeschlossen sein, sodass das Kunststoffmaterial von dem Heißkanalverteiler direkt in den Zuführkanalabschnitt eingeleitet werden kann.

So kann auch vorgesehen sein, dass der Schmelzekanal in den Zuführkanalabschnitt abschnittsweise parallel von der Nadel beabstandet verläuft. Insbesondere dann, wenn die Nadel entlang einer Längsachse der Heißkanaldüse bzw. parallel zu der Längsachse in der Heißkanaldüse angeordnet ist, kann der Schmelzekanal bzw. der Zuführkanalabschnitt besonders einfach durch eine parallele Bohrung relativ zu einer Bohrung des Nadelführungskanals in dem Düsenkörper ausgebildet werden. Die betreffenden Bohrungen können dann so weit voneinander beabstandet sein, dass die Nadel im Zuführkanalabschnitt nicht mit Kunststoffmaterial in Kontakt gelangt. Dies ist besonders vorteilhaft, da dann nicht mehr eine eventuelle Längenausdehnung in Abhängigkeit einer Schmelzetemperatur des Kunststoffmaterials berücksichtigt werden müsste. So kann bei einer durch den Schmelzekanal verlaufenden Nadel, wie aus dem Stand der Technik bekannt, ein bündiger Verschluss einer Einspritzöffnung und damit eine ebene Oberfläche eines Kunststoffformteils im Bereich der Einspritzöffnung nicht immer sichergestellt werden, da sich die Nadel in der Schließposition in die Formkavität hinein oder heraus ausdehnen kann.

Ein Umströmen der Nadel mit Kunststoffmaterial kann insbesondere dadurch verhindert werden, dass in der Schließposition der Nadel die Nadel durch den Einspritzkanalabschnitt bis zu der Düsenöffnung verläuft und dass in der Öffnungsposition die Nadel die Düsenöffnung freigibt und aus dem Einspritzkanalabschnitt heraus gezogen ist. Das Kunststoffmaterial kann dann ungehindert von dem Zuführkanalabschnitt in den Einspritzkanalabschnitt einströmen, ohne dass die Nadel den Strom aus Kunststoffmaterial zumindest abschnittsweise teilt.

Insofern kann der Zuführkanalabschnitt um ein Vielfaches länger ausgebildet sein als der Einspritzkanalabschnitt. Dadurch wird nur ein sehr kleiner Nadelhub erforderlich, um die Nadel aus dem Einspritzkanalabschnitt herauszuziehen. Demnach kann auch der Nadelführungskanal um ein Vielfaches länger ausgebildet sein als der Einspritzkanalabschnitt. Beispielsweise ist es dann auch möglich, eine Dichteinrichtung zwischen Nadelkanal und Nadel in großer Entfernung von dem Einspritzkanalabschnitt anzuordnen, sodass im Bereich der Dichteinrichtung dann ein Temperaturniveau besonders niedrig ist, was eine Ausbildung einer ausreichenden Dichtwirkung besonders begünstigen kann.

Um jegliche Möglichkeit eines Umströmens der Nadel mit Kunststoffmaterial zu verhindern, kann ein möglicher, maximaler Hub der Nadel zumindest einer Länge des Einspritzkanalabschnitts entsprechen. So ist dann sichergestellt, dass die Nadel vollständig aus dem Einspritzkanalabschnitt entfernt werden kann. Gleichzeitig ist es möglich, die Heißkanaldüse auch mit einem geringeren Nadelhub zu betreiben und damit Kunststoffformteile herzustellen, die Fließschatten aufweisen, wenn eine Vermeidung von Fließschatten nicht erforderlich ist.

Der Düsenkörper kann eine Runddüse oder eine Flachdüse ausbilden. Eine Flachdüse kann dann einen rechteckigen Querschnitt aufweisen, innerhalb dem die Nadel verläuft. Vorzugsweise ist an dem Düsenkörper dann immer nur ein Einspritzende ausgebildet, d. h. die Heißkanaldüse ist nur zum Anspritzen einer einzigen Formkavität ausgebildet, wobei grundsätzlich auch mehrere Düsenöffnungen an einer Heißkanaldüse ausgebildet sein können. Weiter kann vorgesehen sein, den Schmelzekanal im Düsenkörper mittig, d. h. zwischen dem Nadelführungskanal und einer Heizeinrichtung anzuordnen, sodass der Nadelführungskanal möglichst weit von der Heizeinrichtung beabstandet ist.

Der Düsenkörper kann einstückig ausgebildet sein, wodurch die Heißkanaldüse besonders kompakt ausbildbar wird, da keine Befestigungsmittel zur Verbindung von Einzelteilen des Düsenkörpers in diesem angeordnet werden müssen. In einer Ausführungsform kann die Heißkanaldüse eine Spitzeneinrichtung aufweisen, die am Düsenkörper angeordnet sein kann und die die Düsenöffnung ausbildet. Die Spitzeneinrichtung kann an dem Einspritzende des Düsenkörpers bzw. der Heißkanaldüse als ein in die Heißkanaldüse eingesetzter Einsatz oder auch in Art einer Kappe an dem Einspritzende, beispielsweise ein- oder aufschraubbar am Düsenkörper, angeordnet sein. Die Spitzeneinrichtung kann dann auch die Heißkanaldüse bzw. den Düsenkörper gegenüber einem Formwerkzeug so abdichten, dass nur in einem Bereich der Spitzeneinrichtung Kunststoffmaterial in einem Zwischenraum zwischen den Heißkanaldüse und dem Formwerkzeug fließen kann.

Die erfindungsgemäße Heißkanalspritzgussvorrichtung umfasst ein Formwerkzeug und zumindest eine in das Formwerkzeug einsetzbare Heißkanaldüse nach einem der Ansprüche 1 bis 18.

Nachfolgend werden bevorzugte Ausführungsformen der Erfindung unter Bezugnahme auf die beigefügten Zeichnungen näher erläutert.

Es zeigen:
- **Fig. 1**: eine Längsschnittansicht einer Ausführungsform einer Heißkanaldüse in einem Formwerkzeug;
- **Fig. 2**: die Heißkanaldüse aus **Fig. 1** in einer Draufsicht;
- **Fig. 3**: eine Längsschnittansicht einer weiteren Ausführungsform einer Heißkanaldüse in einem Formwerkzeug.

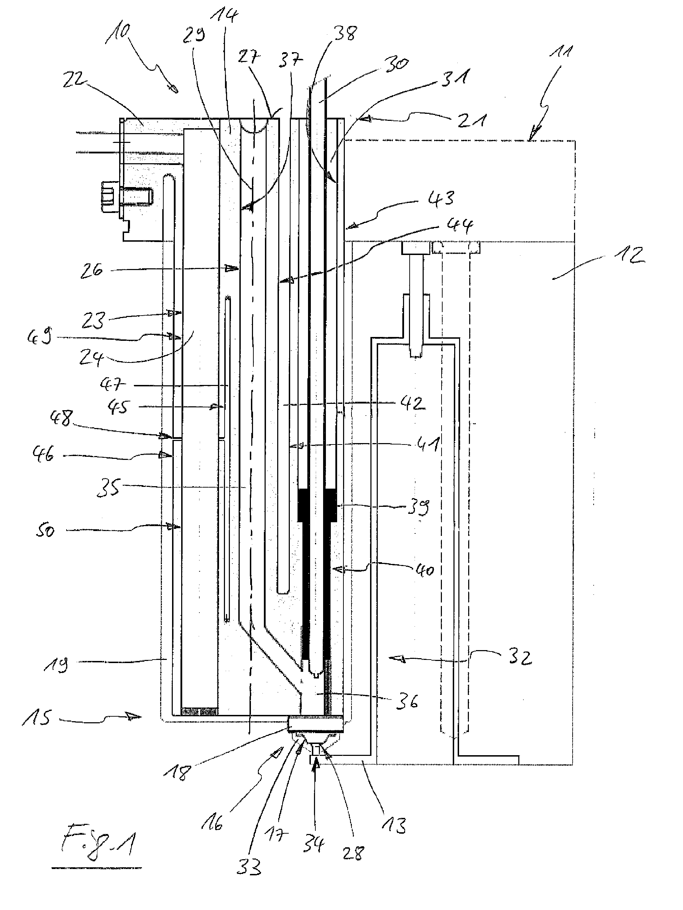

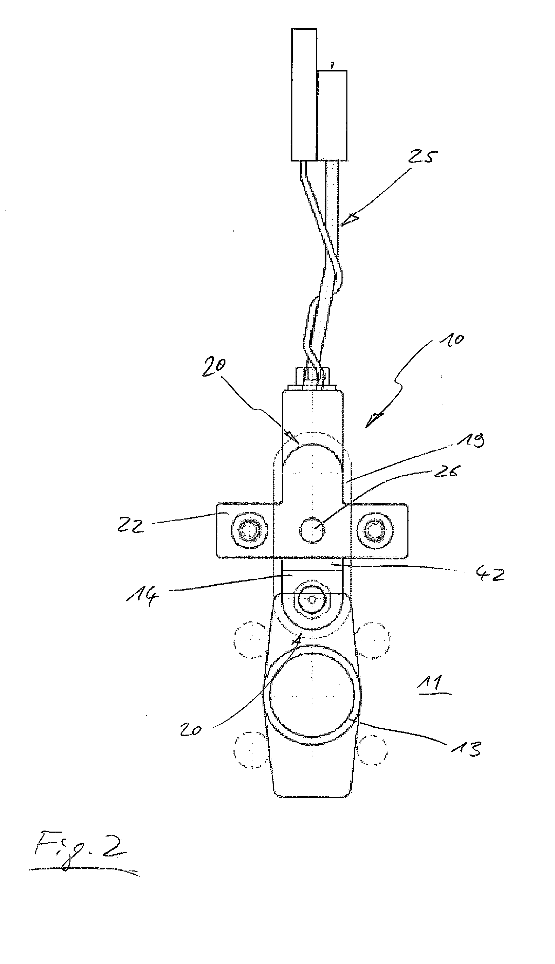

Die **Fig. 1** und **2** zeigen eine Ausführungsform einer Heißkanaldüse 10, die in ein hier nur andeutungsweise dargestelltes Formwerkzeug 11 eingesetzt ist. Das Formwerkzeug 11 umfasst unter anderem eine Formplatte 12, in der eine hier abschnittsweise dargestellte Formkavität 13 ausgebildet ist. Die Heißkanaldüse 10 weist einen im Wesentlichen rechteckigen Düsenkörper 14 auf, an dessen Einspritzende 15 eine Spitzeneinrichtung 16 angeordnet ist. Die Spitzeneinrichtung 16 umfasst eine Buchse 17, die in den Düsenkörper 14 eingesetzt ist, und einen Führungsring 18, der die Heißkanaldüse 10 in einer Montageöffnung 19 des Formwerkzeugs 11 zentriert. Querenden 20 des Düsenkörpers 14 sind halbkreisförmig ausgebildet. An einem dem Einspritzende 15 gegenüber liegendem Kopfende 21 des Düsenkörpers 14 ist eine Montageplatte 22 befestigt. Die Montageplatte 22 deckt einen Beheizungskanal 23 ab, in den eine Heizpatrone 24 mit Anschlussleitungen 25 eingesetzt ist. Benachbart zu dem Beheizungskanal 23 ist ein Schmelzekanal 26 in dem einstückigen Düsenkörper 14 ausgebildet. Der Schmelzekanal 26 verläuft von einer Stirnseite 27 am Kopfende 21 des Düsenkörpers 14 zu einer Düsenöffnung 28 am Einspritzende 15. Parallel zu einer Längsachse 29 der Heißkanaldüse 10 ist eine Nadel 30 in einem Nadelführungskanal 31 längsverschieblich im Düsenkörper 14 gelagert. Die Nadel 30 dient zum Öffnen und Schließen der Düsenöffnung 28 und kann von einer hier dargestellten Öffnungsposition 32 in eine nicht dargestellte Schließposition zum Schließen der Düsenöffnung 28 bewegt werden. Hier nicht näher dargestelltes Kunststoffmaterial strömt in der Öffnungsposition 32 der Nadel 30 durch den Schmelzekanal 26 bis in die Formkavität 13, wobei das plastifizierte Kunststoffmaterial dann auch in einen Zwischenraum 33, gebildet zwischen dem Düsenkörper 14 und der Montageöffnung 19 vor einer Einspritzöffnung 34 der Formkavität 13, eintritt. Der Zwischenraum 33 wird insbesondere durch den Führungsring 18 abgedichtet.

Der Schmelzekanal 26 ist aus einem Zuführkanalabschnitt 35 und aus einem Einspritzkanalabschnitt 36 gebildet. Der Zuführkanalabschnitt 35 ist so im Düsenkörper 14 ausgebildet, dass das Kunststoffmaterial im Zuführkanalabschnitt 35 nicht mit der Nadel 30 in Kontakt gelangen kann. So ist eine Bohrung 37 des Zuführkanalabschnitts 35 von einer Bohrung 38 des Nadelführungskanals 31 und damit von der Nadel 30 beabstandet. Der Einspritzkanalabschnitt 36 verläuft hier koaxial relativ zur Nadel 30.

Bei einem Einspritzen von Kunststoffmaterial in die Formkavität 13 wird die Nadel 30 um einen Hub H aus dem Einspritzkanalabschnitt 36, wie in **Fig. 1** dargestellt, heraus gezogen, derart, dass das Kunststoffmaterial ungehindert durch den Einspritzkanalabschnitt 36 fließen kann und die Nadel 30 nicht von dem Kunststoffmaterial umströmt wird.

In der Bohrung 38 des Nadelführungskanals 31 ist eine Dichtbuchse 39 eingesetzt, die eine Dichteinrichtung 40 in dem Nadelführungskanal 31 ausbildet. So kann verhindert werden, dass Kunststoffmaterial in den Nadelführungskanal 31 eindringt.

Weiter ist der Düsenkörper 14 durch eine Materialausnehmung 41, die von einem Längsschlitz 42 ausgebildet wird, in einem Gehäusebereich 43 mit dem Nadelführungskanal 31 und in einem Gehäusebereich 44 mit dem Schmelzekanal 26 bzw. dem Zuführkanalabschnitt 35 ausgebildet. Der Längsschlitz 42 reicht bis in die Nähe des Einspritzkanalabschnitts 36, sodass die Gehäusebereiche 43 und 44 am Einspritzende 15 miteinander verbunden sind.

Eine weitere Materialausnehmung 45 unterteilt den Düsenkörper 14 in einen Gehäusebereich 46 mit dem Beheizungskanal 23 und in den Gehäusebereich 44. Die Materialausnehmung 45 bildet einen Längsschlitz 47 aus, der zwischen den Gehäusebereichen 44 und 46 verläuft. Die Gehäusebereiche 44 und 46 sind an dem Kopfende 21 und dem Einspritzende 15 des Düsenkörpers 14 miteinander verbunden. Ein Querschlitz 48 teilt den Gehäusebereich 46 in einen oberen Beheizungskanalabschnitt 49 und einen unteren Beheizungskanalabschnitt 50. Dadurch, dass die Heizpatrone 24 vergleichsweise weit von der Nadel 30 beabstandet ist, und der Längsschlitz 42 den Nadelführungskanal 31 vom Schmelzekanal 26 trennt, ist ein Wärmeübergang in den Gehäusebereich 43 bzw. den Nadelführungskanal 31 nur an dem die Gehäusebereiche 43 und 44 verbindenden Einspritzende 15 möglich. Ein Temperaturniveau in dem Gehäusebereich 43 ist wesentlich niedriger als in dem Gehäusebereich 46. Die Ausbildung einer sicheren Abdichtung der Nadel 30 gegenüber dem Nadelführungskanal 31 wird damit wesentlich erleichtert.

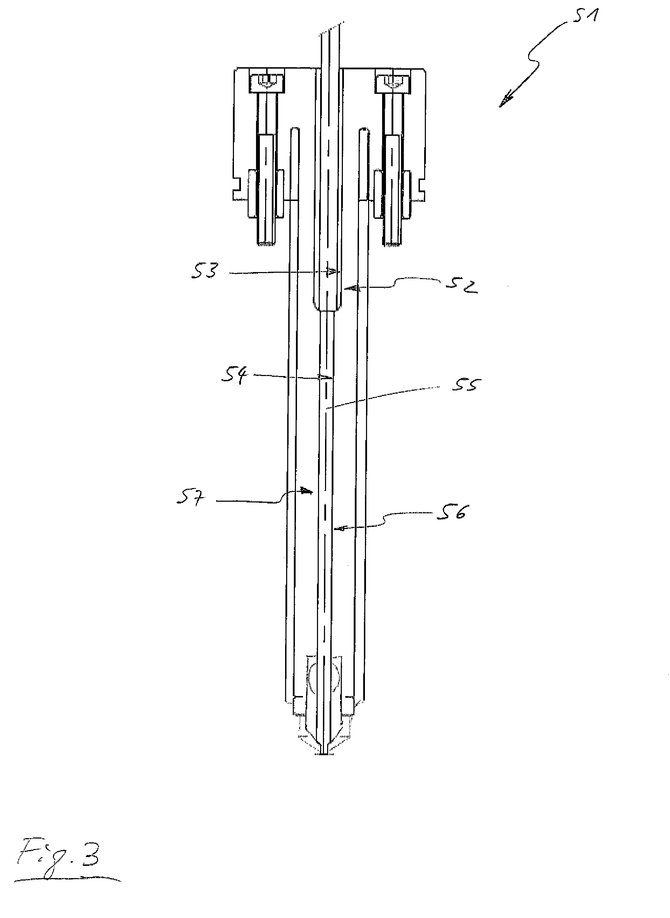

Die **Fig. 3** zeigt eine weitere Ausführungsform einer Heißkanaldüse 51 in einer Längsschnittansicht, wobei im Unterschied zu der Heißkanaldüse aus den **Fig. 1** und **2** hier ein Nadelführungskanal 52 mit einer Bohrung 53 und einer Bohrung 54 ausgebildet ist. Die Bohrung 54 bildet zusammen mit einer Nadel 55 eine Spielpassung 56 aus. Die Spielpassung 56 ist eine Dichteinrichtung 57, die ein Eindringen von Kunststoffmaterial in die Bohrungen 53 und 54 verhindert.

## Patentansprüche

1. Heißkanaldüse (10, 51) zum Anspritzen von Kunststoffformteilen, wobei die Heißkanaldüse in ein Formwerkzeug (11) einer Heißkanalspritzgussvorrichtung einsetzbar ist, wobei die Heißkanaldüse einen Düsenkörper (14) aufweist, wobei in dem Düsenkörper ein Schmelzekanal (26) für Kunststoffmaterial ausgebildet ist, wobei der Schmelzekanal bis zu einer Düsenöffnung (28) an einem Einspritzende (15) der Heißkanaldüse verläuft, wobei die Heißkanaldüse eine Nadel (30, 55) aufweist, wobei die Nadel in einem Nadelführungskanal (31, 52) in dem Düsenkörper längsverschieblich gelagert ist, wobei die Düsenöffnung durch die Nadel in einer Öffnungsposition (32) der Nadel öffenbar und in einer Schließposition der Nadel verschließbar ist, wobei in der Öffnungsposition das Kunststoffmaterial in eine Formkavität (13) des Formwerkzeugs geleitet werden kann,
**dadurch gekennzeichnet,**
**dass** der Schmelzekanal bis zu dem Einspritzende von der Nadel beabstandet im Düsenkörper verläuft, derart, dass die Nadel und der Schmelzekanal in dem Düsenkörper seitlich nebeneinander ausgebildet sind, wobei der Düsenkörper zumindest eine Materialausnehmung (41) aufweist, die zwischenliegend dem Schmelzekanal und dem Nadelführungskanal ausgebildet ist, und den Düsenkörper in voneinander beabstandete Gehäusebereiche (43, 44) unterteilt.

2. Heißkanaldüse nach Anspruch 1,
**dadurch gekennzeichnet,**
**dass** die Heißkanaldüse (10, 51) eine Heizeinrichtung aufweist.

3. Heißkanaldüse nach Anspruch 2,
**dadurch gekennzeichnet,**
**dass** die Heizeinrichtung (24) an oder in dem Düsenkörper (14) angeordnet ist, wobei die Heizeinrichtung an eine Lage des Schmelzekanals (26) angepasst ist, derart, dass bezogen auf einen Querschnitt des Düsenkörpers eine gleichmäßige Temperaturbeaufschlagung des Schmelzekanals erzielbar ist.

4. Heißkanaldüse nach Anspruch 2 oder 3,
**dadurch gekennzeichnet,**
**dass** die Heizeinrichtung und der Schmelzekanal (26) in dem Düsenkörper (14) der Heißkanaldüse (10, 51) seitlich nebeneinander angeordnet sind, und wobei die Heizeinrichtung in einem Beheizungskanal (23) im Düsenkörper aufgenommen ist, wobei der Düsenkörper zumindest eine weitere Materialausnehmung (45) aufweist, die zwischenliegend dem Schmelzekanal und dem Beheizungskanal ausgebildet ist, und den Düsenkörper in voneinander beabstandete Gehäusebereiche (44, 46) unterteilt.

5. Heißkanaldüse nach einem der vorangegangenen Ansprüche,
**dadurch gekennzeichnet,**
**dass** die Materialausnehmung (41, 45) als ein in Längsrichtung des Düsenkörpers (14) verlaufender Längsschlitz (42, 47) ausgebildet ist.

6. Heißkanaldüse nach einem der vorangegangenen Ansprüche,
**dadurch gekennzeichnet,**
**dass** der Schmelzekanal (26) bis zu dem Einspritzende (15) von der Nadel (30, 55) beabstandet im Düsenkörper (14) verläuft, derart, dass in der Öffnungsposition (32) der Nadel ein Umströmen der Nadel mit Kunststoffmaterial vermieden werden kann.

7. Heißkanaldüse nach einem der vorangegangenen Ansprüche,
**dadurch gekennzeichnet,**
**dass** der Nadelführungskanal (31, 52) eine Dichteinrichtung (40, 57) aufweist, die die Nadel (30, 55) gegenüber dem Schmelzekanal (26) abdichtet.

8. Heißkanaldüse nach Anspruch 7,
**dadurch gekennzeichnet,**
**dass** die Dichteinrichtung (57) durch eine Passung (56) zwischen Nadel und Nadelführungskanal ausgebildet ist.

9. Heißkanaldüse nach Anspruch 7 oder 8,
**dadurch gekennzeichnet,**
**dass** die Dichteinrichtung (40) durch ein Dichtelement (39) ausgebildet ist.

10. Heißkanaldüse nach einem der vorangegangenen Ansprüche,
**dadurch gekennzeichnet,**
**dass** der Schmelzekanal (26) aus einem Zuführkanalabschnitt (35) und einem Einspritzkanalabschnitt (36) gebildet ist, wobei der Einspritzkanalabschnitt (36) an dem Einspritzende (15) ausgebildet ist.

11. Heißkanaldüse nach Anspruch 10,
**dadurch gekennzeichnet,**
**dass** der Schmelzekanal (26) in dem Zuführkanalabschnitt (35) abschnittsweise parallel von der Nadel (30, 55) beabstandet verläuft.

12. Heißkanaldüse nach Anspruch 10 oder 11,
**dadurch gekennzeichnet,**
**dass** in der Schließposition die Nadel (30, 55) durch den Einspritzkanalabschnitt (36) bis zu der Düsenöffnung (28) verläuft, und dass in der Öffnungsposition (32) die Nadel die Düsenöffnung frei gibt und aus dem Einspritzkanalabschnitt heraus gezogen ist.

13. Heißkanaldüse nach einem der Ansprüche 10 bis 12,
**dadurch gekennzeichnet,**
**dass** der Zuführkanalabschnitt (35) um ein Vielfaches länger ausgebildet ist als der Einspritzkanalabschnitt (36).

14. Heißkanaldüse nach einem der Ansprüche 10 bis 13,
**dadurch gekennzeichnet,**
**dass** der Nadelführungskanal (31, 52) um ein Vielfaches länger ausgebildet ist als der Einspritzkanalabschnitt (36).

15. Heißkanaldüse nach einem der Ansprüche 10 bis 14,
**dadurch gekennzeichnet,**
**dass** ein möglicher Hub (H) der Nadel (30, 55) zumindest einer Länge des Einspritzkanalsabschnitts (36) entspricht.

16. Heißkanaldüse nach einem der vorangegangenen Ansprüche,
**dadurch gekennzeichnet,**
**dass** der Düsenkörper (14) eine Runddüse oder eine Flachdüse ausbildet.

17. Heißkanaldüse nach einem der vorangegangenen Ansprüche,
**dadurch gekennzeichnet,**
**dass** der Düsenkörper (14) einstückig ausgebildet ist.

18. Heißkanaldüse nach einem der vorangegangenen Ansprüche,
**dadurch gekennzeichnet,**
**dass** die Heißkanaldüse (10, 51) eine Spitzeneinrichtung (16) aufweist, die am Düsenkörper (14) angeordnet ist, und die die Düsenöffnung (28) ausbildet.

19. Heißkanalspritzgussvorrichtung, umfassend ein Formwerkzeug (11) und zumindest eine in das Formwerkzeug einsetzbare Heißkanaldüse (10, 51) nach einem der vorangegangenen Ansprüche.
